# EUROPÄISCHE PATENTSCHRIFT

(11) **EP 2 965 909 B1**
(45) Veröffentlichungstag und Bekanntmachung des Hinweises auf die Patenterteilung: **01.03.2017**
(21) Anmeldenummer: 15173284.9
(22) Anmeldetag: 23.06.2015
(51) Int. Cl.: B32B 41/02, G01N 21/64, B32B 41/00

(54) **VERFAHREN ZUR BEURTEILUNG DER QUALITÄT EINER LAMINATION EINES FOLIENVERBUNDES**
METHOD FOR ASSESSING THE QUALITY OF A LAMINATION OF A FILM COMPOSITE
PROCEDE D'EVALUATION DE LA QUALITE D'UNE LAMINATION D'UN FILM COMPOSITE

(30) Priorität: 08.07.2014 DE 102014109496
(43) Veröffentlichungstag der Anmeldung: 13.01.2016
(73) Patentinhaber: Bundesdruckerei GmbH, 10969 Berlin (DE)
(72) Erfinder: Siebert, Martin, 10965 Berlin (DE); Krüger, Per, 14197 Berlin (DE); Knebel, Michael, 13086 Berlin (DE); Antonczik, Boris, 16567 Schönfließ (DE)
(74) Vertreter: Mammel und Maser

(56) Entgegenhaltungen:
- EP-A1- 2 210 738
- DE-T5- 10 392 433
- US-A1- 2009 289 199
- US-B1- 6 717 521

## Beschreibung

Die Erfindung betrifft ein Verfahren zur Beurteilung der Qualität einer Lamination eines Folienverbundes, der aus zumindest zwei einander zugeordneten Lagen, die einer Laminierstation zugeführt werden, und durch Lamination miteinander zu einem Folienverbund verbunden werden.

Aus der DE 103 92 433 T5 ist ein Verfahren zur Erzeugung von dekorativen Platten bekannt, wobei die Platten eine dekorative Schicht umfassen, worin eine Dekorbahn als Oberflächenschicht auf einer Basisschicht angeordnet und daran durch Pressen unter erhöhtem Druck und Temperatur gebunden ist. Das Dekor und die Strukturwarenbahn werden mit Positioniermittel versehen, die zueinander ausgerichtet werden, um darauf folgend mit einem Identifizierungssystem über Führungen durch eine Laminatriemenpresse hindurchgeführt zu werden. Über ein sekundäres Identifizierungssystem wird nach der Laminatriemenpresse das Zusammenpassen zwischen den Dekormerkmalen und Strukturmerkmalen ermittelt.

Die Beurteilung einer Laminationsqualität von einem Folienverbund ist insbesondere bei der Herstellung eines Folienverbundes für Wert- und/oder Sicherheitsdokumente, wie beispielsweise Identifikationskarten, relevant. Die Qualität der Lamination sorgt für eine erhöhte Manipulationssicherheit, da aufgrund einer zwischen den Lagen wirkender Haftkraft ein Delaminieren erschwert wird. In Normen für ein Wert- oder Sicherheitsdokument sind Grenzwerte für eine solche Haftkraft zwischen zwei laminierten Lagen festgelegt.

Bislang wird die Haftkraft eines Folienverbundes nach dessen Herstellung in einem separaten Arbeitsschritt außerhalb einer Produktionslinie geprüft, wobei der Folienverbund im Rahmen des Delaminationstest zerstört wird, um die Qualität der Lamination zu überprüfen.

Der Erfindung liegt die Aufgabe zugrunde, ein Verfahren zur Beurteilung der Qualität einer Lamination eines Folienverbundes vorzuschlagen, welches zerstörungsfrei ist und insbesondere in einen Fertigungsprozess eingebunden werden kann.

Diese Aufgabe wird durch ein Verfahren mit den Merkmalen des Anspruchs 1 gelöst. Weitere vorteilhafte Ausführungsformen sind in den weiteren Ansprüchen angegeben.

Für das erfindungsgemäße Verfahren ist vorgesehen, dass vor dem Laminieren von wenigstens zwei Lagen in jede Lage zumindest eine Bohrung mit einer definierten Fläche eingebracht wird und die Lagen ein unlaminiertes Folienheft vor der Laminierstation bilden, wobei die zumindest eine Bohrung der zumindest einen weiteren Lage zur zumindest einen Bohrung der ersten Lage fluchtend zu einem gemeinsamen Durchgangsloch angeordnet sind oder werden. Anschließend wird aus dem Folienheft der Folienverbund laminiert und darauffolgend eine Fläche des zumindest einen laminierten Durchgangsloches im Folienverbund erfasst und mit der Fläche der Bohrung in der zumindest einen Lage vor dem Laminieren zu verglichen. Die Veränderung der Fläche des laminierten Durchgangslochs zur Fläche der Bohrung wird erfasst und in einer Auswerteeinrichtung ausgewertet. Aufgrund der Einwirkung von Druck und/oder Temperatur über eine vorbestimmte Zeitdauer auf das Folienheft zur Bildung des Folienverbundes erfolgt eine Formveränderung der jeweiligen Lagen in Abhängigkeit des Fließverhaltens der jeweiligen Lage. Dieses Fließverhalten dient zur Beurteilung der Qualität der Lamination des Folienverbundes. Nach der Lamination ist die Fläche des laminierten Durchgangsloches kleiner als die Fläche der Bohrung vor der Lamination. Der Flächenvergleich bzw. die sich hieraus ergebende Flächendifferenz bildet ein Beurteilungsmaßstab der Laminationsqualität. Da die Fläche des laminierten Durchgangsloches durch eine manuelle oder eine automatische Messung erfasst werden und mit der Größe der Bohrung verglichen werden kann, ist eine zerstörungsfreie Beurteilung der Laminationsqualität möglich. Diese Beurteilung kann sowohl bei einem kontinuierlichen, als auch diskontinuierlichen oder quasi kontinuierlichen Herstellungsprozess eines Folienverbundes aus einem Folienheft mit ggf. darauffolgenden weiteren Bearbeitungsschritten erfolgen.

Unter dem Begriff der Laminationsqualität wird nicht nur die Haftkraft im Laminat, also zwischen den Lagen, sondern auch die Dimensionsstabilität des Folienverbundes verstanden. Die Haftkraft bedeutet eine Mindestkraft, die erforderlich ist, um zumindest zwei Schichten zu delaminieren. Die Dimensionsstabilität gibt eine Aussage über einen Verzug in der Ebene von zumindest einer Lage, also beispielsweise einen Verzug in einem Druckbild oder einem Sicherheitsmerkmal auf oder in der Lage. Ebenso kann die Dimensionsstabilität einen Verzug von einer Komponente zwischen zwei Lagen betreffen, wie beispielsweise eine Antenne.

Eine bevorzugte Ausgestaltung des Verfahrens sieht vor, dass die Fläche des laminierten Durchgangslochs mit einer Bilderfassungseinrichtung erfasst und die erfassten Daten an die Auswerteeinheit weitergeleitet werden. Dadurch kann eine Online-Prüfung erfolgen, die in den Fertigungsprozess des Folienverbundes eingebunden werden kann. Bei der Bilderfassungseinrichtung kann es sich um eine Kamera, beispielsweise eine CCD-Kamera oder dergleichen, handeln.

Des Weiteren ist bevorzugt vorgesehen, dass die Größe der Fläche der Bohrung in der Auswerteeinheit hinterlegt oder eingegeben wird oder übermittelt wird. Beispielsweise bei der Herstellung der Bohrung mit einem Stanzwerkzeug umfasst diese eine definierte Fläche, welche in der Auswerteeinheit eingegeben wird. Bei der Herstellung einer Bohrung mittels einer Laserbestrahlung oder ähnlichen Herstellungsverfahren kann beispielsweise über die Steuereinheit der Bearbeitungseinrichtung zur Steuerung der Laserbestrahlung die Größe der Fläche der hergestellten Bohrung an die Auswerteeinheit übermittelt werden, so dass die aktuellen Bearbeitungsdaten für die Herstellung der vorbestimmten Größe der Bohrung für den Vergleich und die Auswertung vorliegen.

Der Vergleich der Größe der Bohrung und des laminierten Durchgangslochs erfolgt vorteilhafterweise unmittelbar nach dem Laminierprozess. Folglich kann bei der Erfassung einer nicht hinreichenden Laminationsqualität dieser Folienverbund vor der weiteren Bearbeitung ausgeschleust werden.

Die Größe der Fläche der Bohrung wird bevorzugt in Abhängigkeit der Dicke und/oder des Materials der Lage ausgewählt, so dass durch das Fließverhalten der Lagen während der Lamination ein Schließen des Durchgangslochs ausgeschlossen wird. Dadurch ist sichergestellt, dass eine Flächendifferenz zwischen der Bohrung und dem laminierten Durchgangsloch für die Beurteilung der Laminationsqualität verbleibt.

Des Weiteren ist bevorzugt vorgesehen, die Lagen aus einer Kunststofffolie, einer faserverstärkten Kunststofffolie oder aus einem Faserfolienverbund bereitgestellt werden. Vorteilhafterweise werden Folien aus thermoplastisch verarbeitbaren Polymeren, wie Polyolefine (Polyethylen, Polypropylen), Polyester, Polycarbonat (PC), Polyvinylchlorid, Polystyrol und Mischungen (Polymer-Blends), Copolymere wie beispielsweise Acryl, Nitril, Butadienstyrol-Copolymere (ABB) sowie sonstige einschlägig bekannten Materialien zur Herstellung von Smart-Cards, insbesondere aus Polycarbonat (PC) bzw. modifiziertem PC. Des Weiteren können auch Faserfließschichten mit Kunststofffolien als Verbundfolien oder dergleichen eingesetzt werden. Ergänzend kann zur Verstärkung der Haftkraft zusätzlich zwischen zwei Lagen einer Klebemittelschicht aufgebracht werden. Dadurch können auch stärker voneinander abweichende Materialien eingesetzt werden.

Die zumindest eine Bohrung wird bevorzugt außerhalb von die Lagen umfassenden Nutzen eingebracht. Diese werden insbesondere im Randbereich eingebracht, so dass diese Überprüfung der Laminationsqualität im Abfallmaterial der Lage nach dem Ausstanzen der Nutzen durchgeführt wird.

Eine bevorzugte Ausführungsform des Verfahrens sieht vor, dass vor dem Laminieren ein Folienheft aus wenigstens zwei Lagen gebildet wird und mit einem Bearbeitungswerkzeug mit beispielsweise Stanzwerkzeug, Laserbestrahlung oder dergleichen, in alle Lagen gemeinsam jeweils eine Bohrung eingebracht wird. Dies weist den Vorteil auf, dass in einfacher Weise die jeweiligen Bohrungen in einer fluchtenden Anordnung vorgesehen sind, bevor das Folienheft in die Laminierstation eingeführt wird.

Ein alternatives Verfahren sieht vor, dass vor dem Laminieren in jede Lage eine Bohrung eingebracht wird und die Lagen vor dem Laminieren einzeln zugeführt und über die jeweilige Bohrung zueinander fluchtend ausgerichtet und zum Folienheft zusammengeführt werden. Dadurch kann beispielsweise die Einbringung der Bohrung in einem separaten vorbereiteten Schritt erfolgen.

Des Weiteren ist bevorzugt vorgesehen, dass die Lagen als Bahnmaterial oder als Einzelbögen zur Bildung des Folienheftes bereitgestellt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Schnittansicht eines Folienhefts einer Lamination,
Figur 2 eine schematische Schnittansicht eines Folienverbundes nach der Lamination,
Figur 3 eine schematische Ansicht auf den Folienverbund gemäß Figur 2,
Figur 4a u. 4b eine schematische Seitenansicht und Draufsicht auf einen kontinuierlichen Herstellungsprozess des Folienverbundes gemäß Figur 2,
Figur 5a u. 5b eine schematische Seitenansicht und Draufsicht auf einen diskontinuierlichen Herstellungsprozess des Folienverbunds gemäß Figur 2.

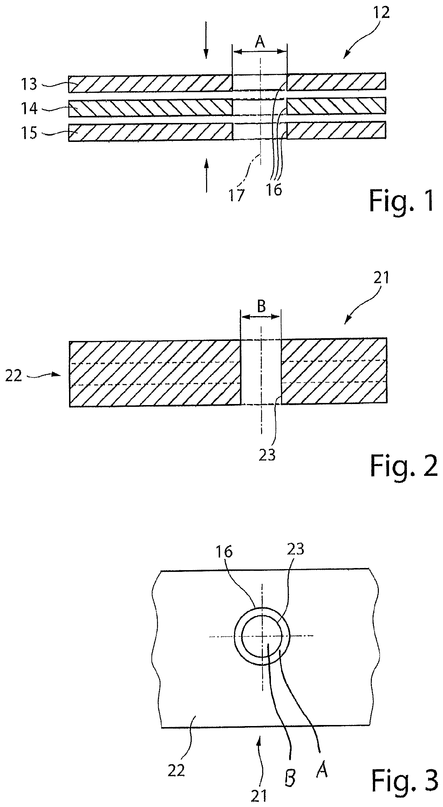

In Figur 1 ist eine schematische Schnittdarstellung eines Folienheftes 12 dargestellt, welches aus mehreren übereinander angeordneten Lagen 13, 14, 15 besteht. Diese Lagen 13, 14, 15 können als Bahnmaterial, beispielsweise als streifenförmiges Bahnmaterial, ausgebildet sein. In jeder Lage 13, 14. 15 ist jeweils eine Bohrung 16 eingebracht. Die einzelnen Lagen 13, 14, 15 sind bezüglich der jeweiligen Bohrung 16 fluchtend zueinander ausgerichtet, so dass die jeweiligen Bohrungen 16 annähernd in oder in einer gemeinsamen Achse 17 liegen. Die Bohrung 16 weist eine Fläche A auf, welche vordefiniert ist. Der Begriff Bohrung kann sowohl einen kreisrunden Querschnitt als auch jede weitere Geometrie umfassen. Bevorzugt umfasst die Bohrung 16 eine runde Fläche A mit einem vorbestimmten Durchmesser. Die Bohrung 16 wird in einer reproduzierbaren Position in der Lage 13, 14, 15 eingebracht. Die einander zugeordneten und übereinanderliegenden Lagen 13, 14, 15 bilden den das Folienheft 12. Alternativ kann auch im Randbereich der Lagen 13, 14, 15 ein Heftung, Vorfixierung oder eine Aussparung für ein Führungselement zur gemeinsamen Ausrichtung der Lagen 13, 14, 15 vorgesehen sein, so dass diese mit der fluchtenden Anordnung der einzelnen Bohrungen 16 in eine Laminierstation 29 eingeführt werden können.

Figur 2 zeigt einen Folienverbund 21, der nach der Lamination des Folienheftes 12 in einer Laminierstation 29 gebildet ist. Dieser Folienverbund 21 umfasst ein Laminat 22, welches aus den einzelnen Lagen 13, 14, 15 des Folienheftes 12 gebildet ist. Des Weiteren umfasst der Folienverbund ein laminiertes Durchgangsloch 23.

In Figur 3 ist eine Draufsicht auf den Folienverbund 21 dargestellt. Der äußere Kreis stellt die Bohrung 16 in der Lage 13, 14, 15 vor der Lamination dar. Der innere Kreis stellt das Durchgangsloch 23 des Folienverbundes 21 dar.

Bei der Lamination wird das Material der jeweiligen Lage durch Einwirkung von Temperatur und/oder Druck und einer vorbestimmten Zeit miteinander verbunden. Die Lamination findet bei einer Glasübergangstemperatur des jeweiligen Materials statt. Die Molekülketten beginnen sich durch den Energieeintrag zu bewegen und das Material fließt. Nach dem Erhitzen der Lagen bis zur Glasübergangstemperatur erfolgt eine Abkühlung. Die erreichte Formänderung aufgrund des Fließens des Materials wird fixiert. Dabei wird eine Formänderung in Z-Richtung erreicht, das heißt, dass Folienheft 12 wird auf eine gewünschte Dicke des Folienverbundes 21 reduziert. In der Ebene der jeweiligen Lage soll die Formänderung der Lage gering gehalten werden. Durch die Differenz der Fläche A der Bohrung 16 und der Fläche B der Durchgangsbohrung 23 kann die Beurteilung der Laminationsqualität erfolgen. Die Flächendifferenz aus der Fläche A zur Fläche B ermöglicht den Rückschluss auf das Fließverhalten der Lagen 13, 14, 15 des Folienverbundes 21 während der Lamination und somit auf die Qualität der Lamination. Die Fläche B wird durch das Fließen des Materials kleiner gegenüber der Fläche A.

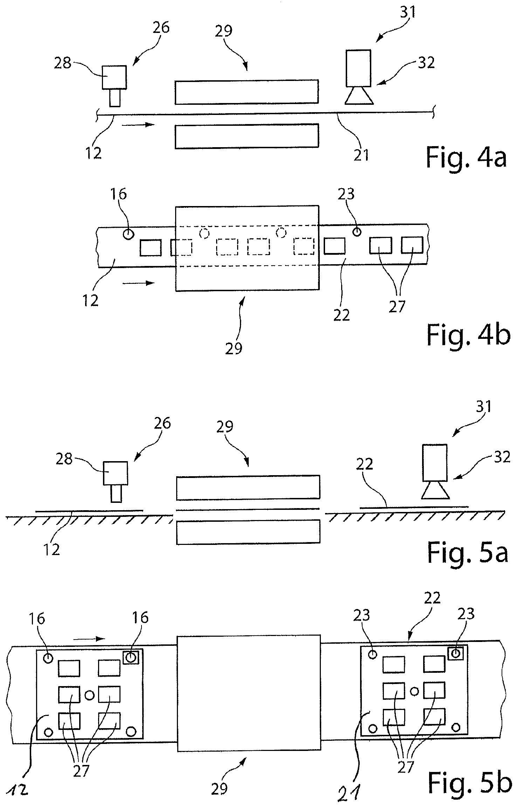

In den Figuren 4a und 4b ist eine schematische Seitenansicht und eine schematische Draufsicht auf einen kontinuierlichen Herstellungsprozess des Folienverbundes 21 dargestellt. Es werden zwei oder mehrere Lagen 13, 14, 15 auf einen Bereich einer ersten Bearbeitungsstation 26 zugeführt. Die Lagen können beispielsweise als Rollenware bereitgestellt werden. In der ersten Bearbeitungsstation 26 erfolgt die Einbringung der Bohrung 16. Dies kann durch Bohrung oder auch durch eine Laserbestrahlung oder dergleichen erfolgen. Die Einbringung der Bohrung 16 erfolgt außerhalb von Nutzen 27, die beispielsweise einreihig hintereinander in den Lagen 13, 14, 15 vorgesehen sind. Alternativ können auch zwei oder mehrere Nutzen und/oder Nutzenreihen nebeneinander auf einem streifenförmigen Bahnmaterial vorgesehen sein. Die Bohrungen 16 sind bevorzugt im Randbereich der Lage 13, 14, 15 vorgesehen. Alternativ oder zusätzlich können dies auch zwischen den Nutzen positioniert werden. In einer Laminierstation 29 erfolgt die Lamination der einzelnen Lagen 13, 14, 15 zu einem Laminat 22 des Folienverbundes 21. Die Laminierstation 29 kann als Laminationspresse oder Rollenlamination ausgebildet sein.

Nach der Laminationsstation 29 ist eine Überwachungsstation 31 vorgesehen. Diese umfasst eine Bilderfassungseinrichtung 32, beispielsweise eine Kamera, um die Fläche B des laminierten Durchgangslochs 23 zu erfassen und an eine nicht näher dargestellte Auswerteeinrichtung weiterzugeben. In dieser Auswerteeinrichtung werden die Daten der Fläche A der Bohrung 16 mit den Daten der Fläche B des Durchgangslochs 23 ausgewertet. Sofern die Flächendifferenz der Fläche A zur Fläche B in einem vordefinierten Bereich liegt, werden die Voraussetzungen an die Laminationsqualität erfüllt. Es kann durch dieses Verfahren eine permanente Prozessüberwachung der Laminationsqualität erfolgen, die zerstörungsfrei ist.

In den Figuren 5a und 5b ist eine schematische Seitenansicht und Draufsicht auf einen diskontinuierlichen oder quasi kontinuierlichen Herstellungsprozess des Folienverbundes 21 dargestellt. Das Folienheft 12 wird aus wenigstens zwei Lagen 13, 14, 15 gebildet, die als Bögen bereitgestellt werden. Solche Bögen können mehrere Nutzen 27 umfassen. Die Bögen werden zueinander zu einem Folienheft 12 ausgerichtet, so dass gemeinsam die Bohrung 16 in jede Lage 13, 14, 15 eingebracht werden kann. Alternativ kann die Einbringung von zumindest einer Bohrung 16 auch in einem vorverlagerten Schritt in jeden einzelnen Bogen unabhängig von einem weiteren Bogen erfolgen. In diesem Fall werden die Folienhefte 12 einander zugeordnet, so dass die einzelnen Bohrungen 16 der Lagen 13, 14, 15 fluchten, so dass das Folienheft 12 in die Laminierstation 29 eingeführt wird. Nach dem Laminieren wird der Folienverbund 21 der Überwachungsstation 31 zugeführt. Es erfolgt eine analoge Auswertung der laminierten Durchgangsbohrung 23 des Laminats 22 zum kontinuierlichen Herstellungsprozess. Diese Prüfung kann in einer separaten Überwachungsstation 31 bzw. einem externen Prüfplatz erfolgen. Ebenso kann dieser in den Produktionsablauf integriert werden.

Der aus dem Folienverbund 21 hergestellte Nutzen 27 kann beispielsweise ein Wert- und/oder Sicherheitsdokument sein, wie beispielsweise ein Personalausweis, eine Scheckkarte, Zutrittskarte, Kreditkarte oder dergleichen.

## Patentansprüche

1. Verfahren zur Beurteilung der Qualität einer Lamination eines Folienverbundes (21), der aus zumindest zwei einander zugeordneten Lagen (13, 14, 15) gebildet wird, die einer Laminierstation (29) zugeführt und durch Lamination miteinander zu dem Folienverbund (21) verbunden werden,
- bei dem vor dem Laminieren in jede Lage (13, 14, 15) zumindest eine Bohrung (16) mit einer definierten Fläche A eingebracht wird,
- bei dem vordem Laminieren die Bohrungen (16) der jeweiligen Lage (13, 14, 15) zueinander fluchtend angeordnet sind und ein Folienheft (12) gebildet wird,
- bei dem aus dem Folienheft (12) der Folienverbund (21) laminiert wird **dadurch gekennzeichnet,**
- **dass** eine Fläche B des zumindest einen laminierten Durchgangslochs (23) im Folienverbund (21) erfasst und mit einer Fläche A der Bohrung (16) verglichen und die Veränderung der Fläche A der Bohrung (16) zur Fläche B des laminierten Durchgangslochs (23) erfasst und in einer Auswerteeinrichtung ausgewertet wird.

2. Verfahren nach Anspruch 1, **dadurch gekennzeichnet, dass** die Fläche B des Durchgangslochs (23) in einer Bilderfassungseinrichtung (32) erfasst und die erfassten Daten an die Auswerteeinrichtung weitergeleitet werden.

3. Verfahren nach Anspruch 1, **dadurch gekennzeichnet, dass** die Größe der Fläche A der Bohrung (16) in der Auswerteeinheit gespeichert wird oder von einer die Bohrung (16) herstellenden Bearbeitungseinrichtung (28) übermittelt wird.

4. Verfahren nach Anspruch 1, **dadurch gekennzeichnet, dass** aus dem Vergleich der Fläche A der Bohrung (16) und der Fläche B des laminierten Durchgangslochs (23) das Fließverhalten der zumindest zwei Lagen (13, 14, 15) des Folienverbundes (21) nach dem Laminierprozess erfasst wird.

5. Verfahren nach einem der vorhergehenden Ansprüche, **dadurch gekennzeichnet, dass** die Größe der Fläche A mit der Bohrung (16) in Abhängigkeit der Dicke und/oder des Materials der jeweiligen Lage (13, 14, 15) ausgewählt wird, so dass durch das Fließverhalten der zumindest einen Lage (13, 14, 15) während der Lamination ein Schließen der Bohrung (16) ausgeschlossen wird.

6. Verfahren nach einem der vorhergehenden Ansprüche, **dadurch gekennzeichnet, dass** die zumindest eine Lage (13, 14, 15) aus einer Kunststofffolie, einer faserverstärkten Kunststofffolie oder einem Faserfolienverbund eingesetzt wird.

7. Verfahren nach einem der vorhergehenden Ansprüche, **dadurch gekennzeichnet, dass** die zumindest eine Lage (13, 14, 15) einen oder mehrere Nutzen (27) umfasst und die zumindest eine Bohrung (16) außerhalb der Nutzen (27), insbesondere im Randbereich der zumindest einen Lage (13, 14, 15) eingebracht wird.

8. Verfahren nach einem der vorhergehenden Ansprüche, **dadurch gekennzeichnet, dass** vor dem Laminieren ein Folienheft (12) aus wenigstens zwei Lagen (13, 14, 15) gebildet wird und mit einer Bearbeitungseinrichtung in alle Lagen (13, 14, 15) gemeinsam jeweils ein Bohrung (16) eingebracht wird.

9. Verfahren nach einem der Ansprüche 1 bis 7, **dadurch gekennzeichnet, dass** vor dem Laminieren in jede Lage (13, 14, 15) eine Bohrung (16) eingebracht wird und die Lagen (13, 14, 15) vor dem Laminieren einzeln zusammengeführt und über die jeweilige Bohrung (16) fluchtend zueinander ausgerichtet und zum Folienheft (12) zusammengeführt werden.

10. Verfahren nach einem der vorhergehenden Ansprüche, **dadurch gekennzeichnet, dass** die Lagen (13, 14, 15) als Bahnmaterial oder als Einzelbögen zur Bildung des Folienheftes (12) bereitgestellt werden.

## Claims

1. A method for assessing the quality of a lamination of a film composite (21) formed by at least two layers (13, 14, 15) associated with one another which are fed into a lamination station (29) and are assembled to one another by lamination so as to obtain said film composite (21),
- in which at least one hole (16) with a defined surface area A is created in each layer (13, 14, 15) prior to their lamination,
- in which the holes (16) of each respective layer (13, 14, 15) are aligned flush in relation to one another and a film booklet (12) is thus created,
- in which the lamination of the film composite (21) is based on said film booklet (12), **characterised in that**
- a surface area B of the at least one laminated through hole (23) in the film composite (21) is captured and compared to a surface area A of the hole (16) and the change in the surface area A of the hole (16) with respect to the surface area B of the laminated through hole (23) is captured and is evaluated in an evaluation device.

2. The method as claimed in claim 1, **characterised in that** the surface area B of the through hole (23) is captured by an image capturing device (32) and the captured data are forwarded to the evaluation device.

3. The method as claimed in claim 1, **characterised in that** the dimension of the surface area A of the hole (16) is stored in the evaluation device or is transmitted by a machining device (28) used for forming the hole (16).

4. The method as claimed in claim 1, **characterised in that** by comparing the surface area A of the hole (16) and the surface area B of the laminated through hole (23), the flow behaviour of the at least two layers (13, 14, 15) of the film composite (21) is detected subsequent to the lamination process.

5. The method as claimed in any of the preceding claims, **characterised in that** the dimension of the surface area A for the hole (16) is selected in function of the thickness and/or the material of each individual layer (13, 14, 15), such that a closure of the hole (16) due to the flow behaviour of the at least one layer (13, 14, 15) during the lamination process may be excluded.

6. The method as claimed in any of the preceding claims, **characterised in that** for the at least one layer (13, 14, 15) a plastic film, a fibre-reinforced plastic film, or a fibre film composite is used.

7. The method as claimed in any of the preceding claims, **characterised in that** the at least one layer (13, 14, 15) comprises one or several panels (27) and **in that** the at least one hole (16) is created in a region beyond the panels (27), in particular in the edge region of the at least one layer (13, 14, 15).

8. The method as claimed in any of the preceding claims, **characterised in that** prior to lamination, a film booklet (12) consisting of at least two layers (13, 14, 15) is formed and a hole (16) is created in all respective layers (13, 14, 15) at a time using a machining device.

9. The method as claimed in any one of claims 1 to 7, **characterised in that** prior to lamination, a hole (16) is created in each layer (13, 14, 15) and **in that** prior to lamination, said layers (13, 14, 15) are individually assembled and aligned flush in relation to one another via the respective holes (16) and are assembled so as to form said film booklet (12).

10. The method as claimed in any of the preceding claims, **characterised in that** the layers (13, 14, 15) used for forming the film booklet (12) are provided as a web material or as individual sheets.

## Revendications

1. Procédé destiné à évaluer la qualité d'une lamination d'un composite de feuilles (21) formé par au moins deux couches (13, 14, 15) arrangées l'une par rapport à l'autre, lesquelles sont amenées à une station de lamination (29) et sont assemblées les unes aux autres par lamination pour former le composite de feuilles (21),
- lors duquel, avant la lamination, au moins un trou (16) pourvu d'une surface définie A est réalisé dans chaque couche (13, 14, 15),
- lors duquel, avant la lamination, les trous (16) des couches respectives (13, 14, 15) sont disposés de manière à coïncider les uns par rapport aux autres et un livret de feuilles (12) est formé,
- lors duquel le composite de feuilles (21) est réalisé par lamination à partir du livret de feuilles (12),
**caractérisé en ce que**
- une surface B dudit au moins un trou de passage laminé (23) dans le composite de feuilles (21) est saisie et est comparée avec une surface A du trou (16) et **en ce que** la modification de la surface A du trou (16) par rapport à la surface B du trou de passage laminé (23) est saisie et est évaluée dans un dispositif d'évaluation.

2. Procédé selon la revendication 1, **caractérisé en ce que** la surface B du trou de passage (23) est saisie dans un dispositif de saisie d'images (32) et que les données saisies sont transmises au dispositif d'évaluation.

3. Procédé selon la revendication 1, **caractérisé en ce que** la dimension de la surface A du trou (16) est stockée dans l'unité d'évaluation ou est transmise par un dispositif d'usinage (28) qui effectue le trou (16).

4. Procédé selon la revendication 1, **caractérisé en ce que** les caractéristiques du flux desdites au moins deux couches (13, 14, 15) du composite de feuilles (21) sont saisies, après le processus de lamination, en comparant la surface A du trou (16) et la surface B du trou de passage laminé (23).

5. Procédé selon l'une quelconque des revendications précédentes, **caractérisé en ce que** la dimension de la surface A pour le trou (16) est choisie en fonction de l'épaisseur et/ou du matériau de la couche respective (13, 14, 15) de telle sorte que les caractéristiques du flux de ladite au moins une couche (13, 14, 15) excluent une obturation du trou (16) pendant la lamination.

6. Procédé selon une quelconque des revendications précédentes, **caractérisé en ce que** ladite au moins une couche (13, 14, 15) utilisée est réalisée en une feuille en matière plastique, en une feuille en matière plastique renforcée de fibres ou en un composite de feuilles de fibres.

7. Procédé selon une quelconque des revendications précédentes, **caractérisé en ce que** ladite au moins une couche (13, 14, 15) comprend un ou plusieurs flans imprimés (27) et que ledit au moins un trou (16) est réalisé à l'extérieur des flans imprimés (27), en particulier dans la zone périphérique de ladite au moins une couche (13, 14, 15).

8. Procédé selon l'une quelconque des revendications précédentes, **caractérisé en ce qu'**un livret de feuilles (12) est formé, avant la lamination, à partir d'au moins deux couches (13, 14, 15) et **en ce que** un trou (16) est réalisé respectivement dans toutes les couches (13, 14, 15) à la fois grâce à un dispositif d'usinage.

9. Procédé selon l'une quelconque des revendications 1 à 7, **caractérisé en ce qu'**un trou (16) est réalisé, avant la lamination, dans chaque couche (13, 14, 15) et **en ce que** les couches (13, 14, 15) sont réunies une par une avant la lamination et arrangées grâce au trou respectif (16) de manière à coïncider les unes par rapport aux autres, puis assemblées pour former le livret de feuilles (12).

10. Procédé selon l'une quelconque des revendications précédentes, **caractérisé en ce que** les couches (13, 14, 15) sont fournies en tant que matériau en bande ou en feuilles individuelles en vue de former le livret de feuilles (12).
